(19) Europäisches Patentamt
European Patent Office
Office européen des brevets

(11) EP 4 782 477 A1

(12) **EUROPEAN PATENT APPLICATION**
published in accordance with Art. 153(4) EPC

(43) Date of publication:
**29.07.2026 Bulletin 2026/31**

(21) Application number: **24868451.6**

(22) Date of filing: **18.07.2024**

(51) International Patent Classification (IPC):
***C08G 75/20*** (2016.01) ***C08J 5/22*** (2006.01)
***B01D 71/68*** (2006.01) ***B01D 61/42*** (2006.01)
***B01D 67/00*** (2006.01) ***B01J 39/19*** (2017.01)
***B01J 31/10*** (2006.01)

(52) Cooperative Patent Classification (CPC):
**B01D 61/42; B01D 67/00; B01D 71/68; B01J 31/10; B01J 39/19; C08G 75/20; C08J 5/22**

(86) International application number:
**PCT/KR2024/010392**

(87) International publication number:
**WO 2025/063469 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.09.2023 KR 20230127404**
**21.12.2023 KR 20230188239**

(71) Applicant: **KCC Corporation**
**Seoul 06608 (KR)**

(72) Inventors:
- **LIM, Taewook**
  **Yongin-si, Gyeonggi-do 16813 (KR)**
- **HONG, Seungmin**
  **Hwaseong-si, Gyeonggi-do 18452 (KR)**
- **JEON, Jihoon**
  **Seoul 01318 (KR)**
- **KIM, Gwang-Gyu**
  **Seoul 06326 (KR)**
- **KANG, Kyounghoon**
  **Suwon-si, Gyeonggi-do 16515 (KR)**

(74) Representative: **Pfenning, Meinig & Partner mbB**
**Patent- und Rechtsanwälte**
**Theresienhöhe 11a**
**80339 München (DE)**

(54) **CATIONIC EXCHANGE RESIN, METHOD FOR PREPARING SAME, ION EXCHANGE MEMBRANE FOR SEPERATING ALKALI METAL SPECIES, AND ELECTRODIALYSIS DEVICE FOR LITHIUM EXTRACTION**

(57) A cation exchange resin according to the present invention comprises: a first repeating unit represented by chemical formula 1; and a second repeating unit represented by chemical formula 2.

[Chemical Formula 1]

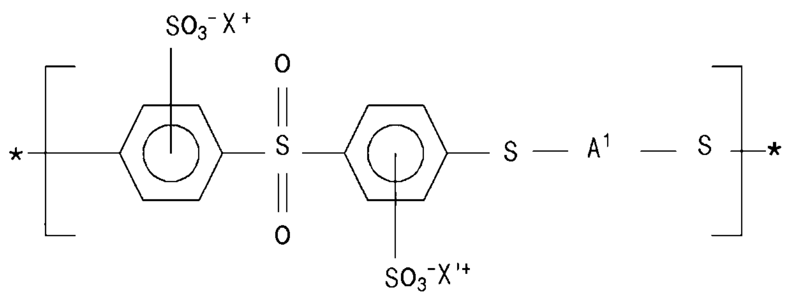

In chemical formula 1, X and X' are each independently hydrogen or an alkali metal species (E), and $A^1$ is represented by

EP 4 782 477 A1

chemical formula 3 or chemical formula 4.

[Chemical Formula 2]

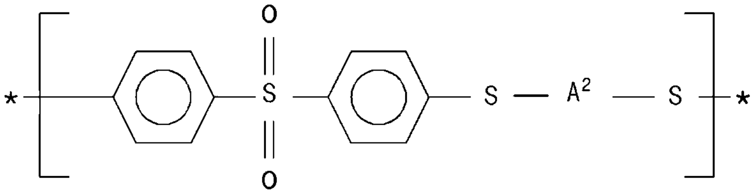

In chemical formula 2, $A^2$ is represented by chemical formula 3 or chemical formula 4,

[Chemical Formula 3]

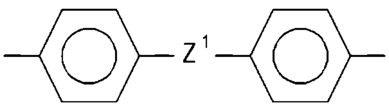

In chemical formula 3, $Z^1$ is -S-, -O-, -C(O)-, or -C($R^1R^2$)-, and $R^1$ and $R^2$ are each independently a hydrogen atom, an alkyl group of $C_1$ to $C_2$, a halogen, or a halogen-substituted alkyl group of Ci to $C_2$.

[Chemical Formula 4]

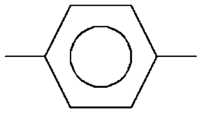

【Fig. 1】

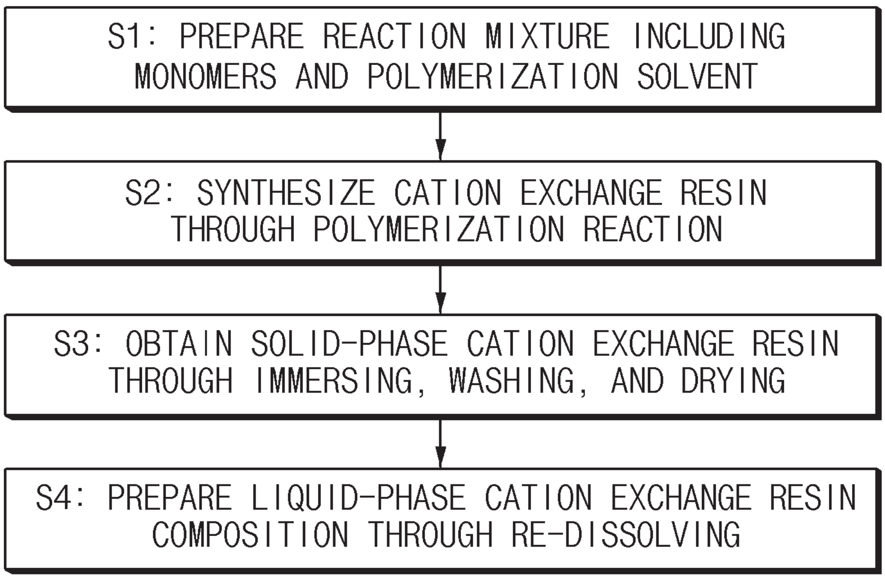

## Description

[Technical Field]

This application claims the benefit of priority to Korean Patent Application No. 10-2023-0127404, filed in the Korean Intellectual Property Office on September 22, 2023, and Korean Patent Application No. 10-2023-0188239, filed in the Korean Intellectual Property Office on December 21, 2023, the entire contents of which are incorporated herein by reference.

The present disclosure relates to a cation exchange resin and a method for preparing the same, an ion exchange membrane for separating an alkali metal species including the cation exchange resin, and an electrodialysis apparatus for lithium extraction.

[Background Art]

Electrodialysis is an apparatus which separates and concentrates an ionic material in a solution by using a cation exchange membrane and an anion exchange membrane by using a direct current serving as a driving force. Traditionally, an electrodialysis process has been used for desalination of seawater, a desalting process, removal of heavy metals from soil, and treatment of various industrial wastes. However, the electrodialysis process has recently attracted attention as an eco-friendly process for extracting lithium, which is a major mineral material for a secondary battery.

A cation exchange membrane, which is a major material used for electrodialysis for lithium extraction, among ion exchange membranes, is a core material which selectively allows only a lithium ion to pass and concentrates the lithium ion in a lithium hydroxide form. A cation exchange membrane, which is recently commercialized, has a form of a perfluorosulfonic acid (PFSA) ion exchange resin alone or a crosslinked polystyrene resin including a sulfonated functional group alone, or has a form in which these resins is impregnated into a polymer support.

However, for a fluorine-based ion exchange resin, although the fluorine-based ion exchange resin has high ion conductivity and excellent chemical stability, there are problems in that the price is very high, the stability at a high temperature is somewhat degraded, and regulations on use are being strengthened in relation to environmental pollution.

In addition, the sulfonated polystyrene resin is easily broken when a membrane is dried. Accordingly, the sulfonated polystyrene resin should be used in a composite membrane form. However, there are problems in that processing is not easy and mechanical stability and chemical stability are significantly inferior to those of the fluorine-based cation exchange resin.

Accordingly, there is a need to develop a cation exchange resin for lithium extraction, which exhibits economic efficiency superior to that of a fluorine-based cation exchange resin while improving mechanical stability and chemical stability.

[Disclosure]

[Technical Problem]

To solve the problem, the present disclosure is to provide a cation exchange resin having higher ion conductivity and more excellent chemical stability and prepared at costs lower than those of a conventional fluorine-based cation exchange resin, and a method for preparing the same.

In addition, the present disclosure is to provide an ion exchange membrane for separating an alkali metal species, which is prepared using a cation exchange, and an electrodialysis apparatus for lithium extraction.

[Technical Solution]

According to another aspect, the present disclosure provides a cation exchange resin including a first repeating unit represented by following Chemical Formula 1, and a second repeating unit represented by following Chemical Formula 2,

[Chemical Formula 1]

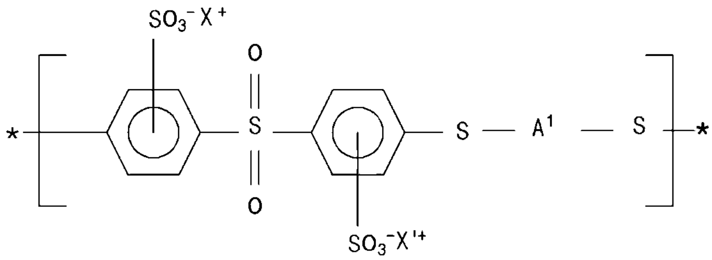

(in Chemical Formula 1,
each of X and X' is independently hydrogen or an alkali metal species (E), and $A^1$ is represented by Chemical Formula 3 or Chemical Formula 4 below)

[Chemical Formula 2]

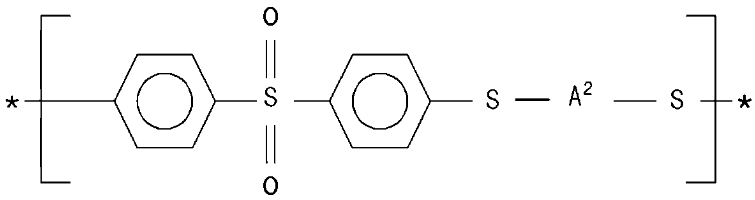

(in Chemical Formula 2,
$A^2$ is represented by Chemical Formula 3 or Chemical Formula 4 below),

[Chemical Formula 3]

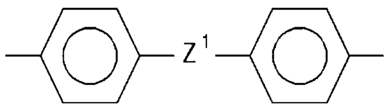

(in Chemical Formula 3,
$Z^1$ is -S-, -O-, -C(O)-, or $-C(R^1R^2)-$, and
each of $R^1$ and $R^2$ are independently hydrogen, a $C_1$ to $C_2$ alkyl group, a halogen, or a halogen-substituted $C_1$ to $C_2$ alkyl group).

[Chemical Formula 4]

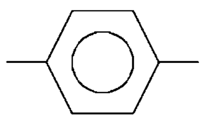

According to another aspect, the present disclosure provides a cation exchange resin composition including the cation exchange resin and an ion exchange membrane for separating an alkali metal species (M), which is obtained as a formed membrane of the resin composition.

According to still another aspect, the present disclosure provides an ion exchange membrane for separating alkali metal species (M) including the cation exchange resin .

According to still another aspect, the present disclosure provides an electrodialysis apparatus for lithium extraction, which includes an ion exchange membrane for separating the alkali metal species (M).

According to still another aspect, the present disclosure provides a method for preparing a cation exchange resin,

which includes making a polymerization reaction for a reaction mixture including a first monomer represented by Chemical Formula 7; a second monomer represented by Chemical Formula 8; a third monomer represented by Chemical Formula 9 or Chemical Formula 10, and a polymerization solvent.

[Chemical Formula 7]

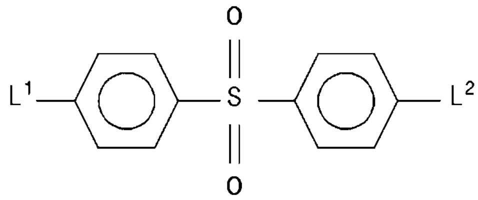

(in Chemical Formula 7,
each of $L^1$ and $L^2$, which is a leaving group removed during the polymerization reaction, is independently a halogen element)

[Chemical Formula 8]

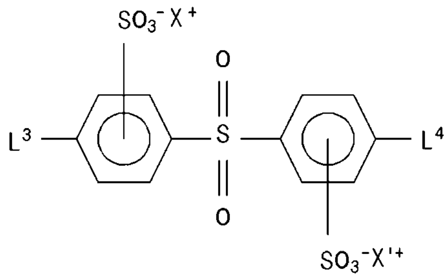

(in Chemical Formula 8,
each of X and X' is independently hydrogen or an alkali metal species (E) without the alkali metal species (M). and each of $L^3$ and $L^4$, which is a leaving group removed during the polymerization reaction, and is independently a halogen element)

[Chemical Formula 9]

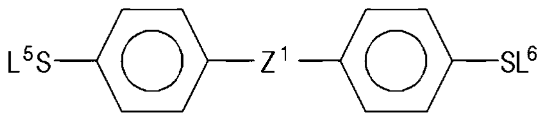

(in Chemical Formula 9,
$Z^1$ is -S-, -O-, -C(O)-, or -C($R^1R^2$)-, and
each of $R^1$ and $R^2$ is independently hydrogen, a $C_1$ to $C_2$ alkyl group, halogen, or a halogen-substituted $C_1$ to $C_2$ alkyl group, and
each of $L^5$ and $L^6$ is a leaving group during the polymerization reaction, and independently a cation of the alkali metal species (E), or a hydrogen atom).

[Chemical Formula 10]

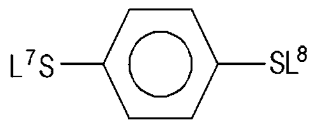

(in Chemical Formula 10,
each of $L^7$ and $L^8$ is a leaving group removed during a polymerization reaction, and independently a cation of an alkali metal species (E) or a hydrogen atom).

[Advantageous Effects]

The cation exchange resin according to the present disclosure includes the repeating units having a structure in which benzene groups and/or sulfonated benzene groups are bonded to each other through a thioether bond to a phenyl sulfone structure substituted with a sulfonic acid group having excellent ion exchange performance. As in the cation exchange resin according to the present disclosure, when benzene groups are bonded to each other through the thioether group, bonding strength is higher than when which the benzene groups are bonded to each other through an ether group. Accordingly, higher chemical stability may be realized, as compared to the conventional commercialized sulfonated polystyrene.

In addition, the cation exchange resin according to the present disclosure may be synthesized using lower-cost monomers, and may allow an easy polymerization process. Accordingly, the cation exchange resin may be prepared more economically, as compared to conventional commercialized fluorine-based ion exchange resins.

In addition, the ion exchange membrane for separating an alkali metal species (M), which is prepared using the cation exchange resin according to the present disclosure, may exhibit excellent swelling characteristics when immersed in water and exhibit excellent alkali resistance. Accordingly, the ion exchange membrane may stably operate over the wide pH range.

In addition, when the ion exchange membrane for separating the alkali metal species (M) is prepared using the cation exchange resin according to the present disclosure, porous polyolefin or inorganic fiber having excellent dimensional stability and low cost may be used as a support. Accordingly, the ion exchange membrane, which is inexpensive and exhibits excellent mechanical durability, may be prepared.

[Description of Drawings]

FIG. 1 is a flowchart illustrating a method for preparing a cation exchange resin according to the present disclosure; and

FIG. 2 is a view illustrating an electrodialysis apparatus for lithium extraction according to the present disclosure.

[Best Mode]

Hereinafter, the present disclosure will be described in detail.

Cation exchange resin

Hereinafter, a cation exchange resin will be first described according to the present disclosure.

The cation exchange resin according to the present disclosure includes a first repeating unit represented by Chemical Formula 1 below and a second repeating unit represented by Chemical Formula 2 below.

[Chemical Formula 1]

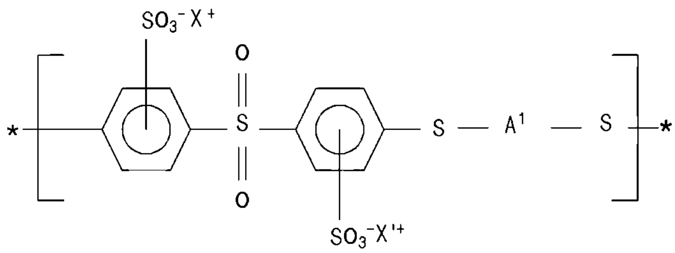

In Chemical Formula 1,
Each of X and X' may be independently hydrogen or an alkali metal species (E). In this case, the alkali metal species (E) may be, for example, Li, Na, or K, and is preferably Na or K.

[Chemical Formula 2]

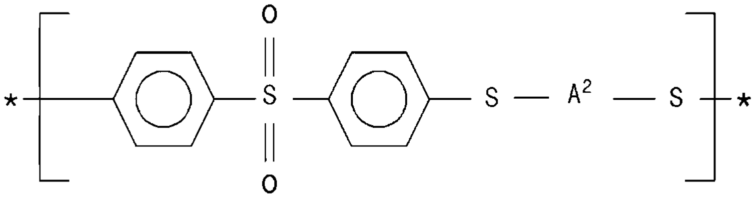

In Chemical Formula 2, $A^2$ may be represented by Chemical Formula 3 or Chemical Formula 4 below.

[Chemical Formula 3]

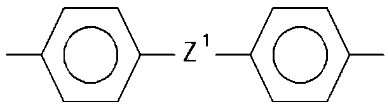

In Chemical Formula 3, $Z^1$ is -S-, -O-, -C(O)-, or -C($R^1R^2$)-, and each of $R^1$ and $R^2$ are independently hydrogen, a $C_1$ to $C_2$ alkyl group, a halogen, or a halogen-substituted $C_1$ to $C_2$ alkyl group. Preferably, $Z^1$ may be -S- or -O-.

[Chemical Formula 4]

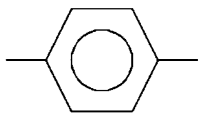

Meanwhile, $A^1$ in Chemical Formula 1 and $A^2$ in Chemical Formula 2 may be the same as or different from each other. However, from a viewpoint of ease of synthesis and manufacturing cost, $A^1$ and $A^2$ are more preferably the same as each other.
Specifically, $A^1$ in Chemical Formula 1 and $A^2$ in Chemical Formula 2 may be represented by Chemical Formula 3 below or may be represented by Chemical Formula 4.
The first repeating unit includes a sulfonic acid group substituted on a phenyl group, and the sulfonic acid group acts as a cation exchanger such that high ion exchange performance may be realized. In addition, since the first repeating unit and the second repeating unit have a structure in which benzenes are bonded through a thioether group having higher bonding strength than an ether group, excellent chemical stability such as pH stability is exhibited. Accordingly, the cation exchange resin according to the present disclosure, which includes the first repeating unit and the second repeating unit, exhibits high ion exchange performance and excellent chemical stability.
Specifically, the first repeating unit may be represented by Chemical Formula 1A below.

[Chemical Formula 1A]

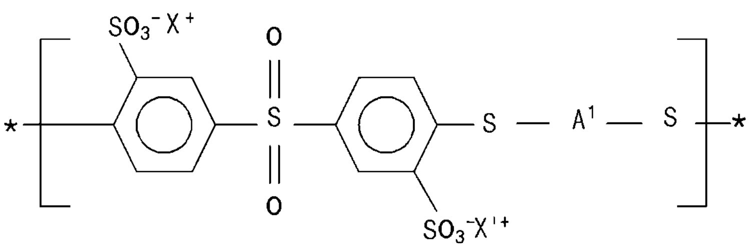

In Chemical Formula 1A, each of X, X', and $A^1$ is the same as described in Chemical Formula 1. When the sulfonic acid group is substituted at a position as in Chemical Formula 1A, synthesis is easy, and excellent ion exchange performance is further exhibited.
Meanwhile, the cation exchange resin according to the present disclosure may include the first repeating unit and the second repeating unit at a molar ratio ranging from 30:70 to 70:30, preferably from 30:70 to 60:40, and more preferably from 30:70 to 50:50. When the first repeating unit and the second repeating unit satisfy the molar ratio described above, excellent ion exchange performance, excellent chemical stability, and excellent swelling characteristics are exhibited. When the molar ratio of the first repeating unit is smaller than the above range, a content of the sulfonic acid group acting as

a cation exchanger is reduced, such that ion exchange capacity may be decreased. When the molar ratio exceeds the above range, water absorbability is increased, such that swelling characteristics may be deteriorated.

More specifically, the cation exchange resin according to the present disclosure may include a repeating unit represented by Chemical Formula 5 below or a repeating unit represented by Chemical Formula 6.

[Chemical Formula 5]

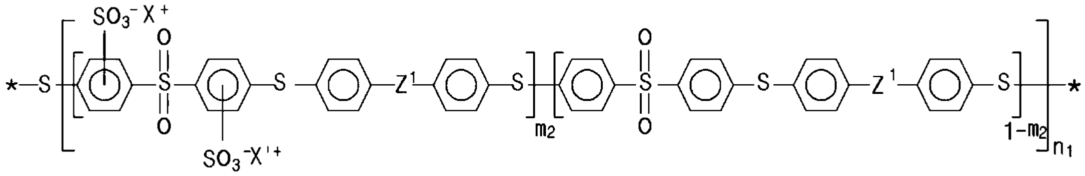

In Chemical Formula 5, each of X and X' is the same as defined in Chemical Formula 1, and each of $Z^1$, $R^1$, and $R^2$ is the same as defined in Chemical Formula 3.

Meanwhile, $m_1$ is a positive number greater than 0 and less than or equal to 1, and may be, preferably, a positive number ranging from 0.3 to 0.7, a positive number ranging from 0.3 to 0.6, or a positive number ranging from 0.3 to 0.5. When $m_1$ satisfies the above range, excellent ion exchange performance, excellent chemical stability, and excellent swelling characteristics are exhibited. When $m_1$ is excessively small, the content of a sulfonic acid group acting as the cation exchanger may be reduced, such that ion exchange capacity may be decreased. When $m_1$ is excessively large, the water absorption may be increased to degrade the swelling characteristic.

$n_1$ may be an integer ranging from 30 to 1,000, and preferably an integer ranging from 30 to 800. When $n_1$ satisfies the above range, a weight-average molecular weight of the cation exchange resin may be appropriately controlled. When $n_1$ is excessively small, ion exchange capacity and mechanical properties may be degraded. When $n_1$ is excessively large, the viscosity of a resin composition may be increased, such that preparation of the ion exchange membrane is difficult.

[Chemical Formula 6]

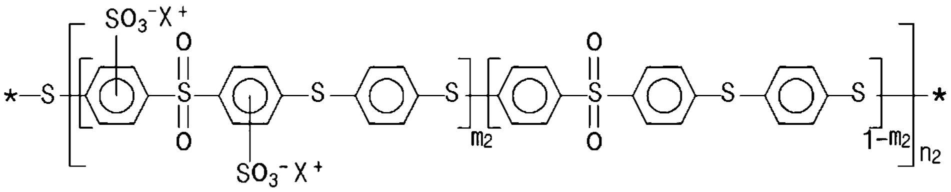

In Chemical Formula 6, each of X and X' is the same as defined in Chemical Formula 1, and each of $Z^1$, $R^1$, and $R^2$ is the same as defined in Chemical Formula 3.

Meanwhile, $m_2$ is a positive number greater than 0 and less than or equal to 1, and may be, preferably, a positive number ranging from 0.3 to 0.7, a positive number ranging from 0.3 to 0.6, or a positive number ranging from 0.3 to 0.5. When $m_2$ satisfies the above range, excellent ion exchange performance, excellent chemical stability, and excellent swelling characteristics are exhibited. When $m_2$ is excessively small, the content of the sulfonic acid group acting as the cation exchanger may be decreased, such that the ion exchange capacity is decreased. When $m_2$ is excessively large, water absorbability may be increased, such that swelling characteristics are degraded.

$n_2$ may be an integer ranging from 50 to 1,000, and preferably an integer ranging from 30 to 800. When $n_2$ satisfies the above range, the weight-average molecular weight of the cation exchange resin may be appropriately controlled. When $n_2$ is excessively small, the ion exchange capacity and the mechanical properties may be degraded. When $n_2$ is excessively large, the viscosity of the resin composition may be increased, such that the preparation of the ion exchange membrane is difficult.

In addition, the cation exchange resin according to the present disclosure may have a weight-average molecular weight ranging from 50,000 g/mol to 500,000 g/mol, preferably ranging from 50,000 g/mol to 400,000 g/mol, and more preferably ranging from 100,000 g/mol to 400,000 g/mol. When the weight-average molecular weight of the cation exchange resin satisfies the above range, the preparation of the ion exchange membrane may be easy, and the excellent mechanical strength of the ion exchange membrane may be exhibited.

<u>Method for preparing cation exchange resin</u>

Hereinafter, the method for preparing the cation exchange resin according to the present disclosure will be described.

The cation exchange resin according to the present disclosure may be prepared by including the step for polymerizing a reaction mixture including a first monomer represented by Chemical Formula 7 below, a second monomer represented by Chemical Formula 8 below, a third monomer represented by Chemical Formula 9 or Chemical Formula 10 below, and a polymerization solvent.

FIG. 1 illustrates a method for preparing a cation exchange resin according to the present disclosure.

As illustrated in FIG. 1, the method for preparing the cation exchange resin according to the present disclosure includes the steps for adding a polymerization solvent to the mixture of the first monomer, the second monomer, and the third monomer to form a reaction mixture (S1), and for polymerizing the reaction mixture to synthesize the cation exchange resin (S2).

In addition, the method for preparing the cation exchange resin according to the present disclosure may further include, if necessary, the steps for separating the synthesized cation exchange resin and washing and drying the result to prepare a solid-phase cation exchange resin (S3), and re-dissolving the solid-phase cation exchange resin to form a liquid-phase cation exchange resin composition (S4).

Hereinafter, the method for preparing the cation exchange resin according to the present disclosure will be described in more detail.

First, the polymerization solvent is added to the mixture of the first monomer, the second monomer, and the third monomer to form the reaction mixture (step S1).

In this case, the first monomer is a compound represented by Chemical Formula 7 below, which constitutes the second repeating unit in the cation exchange resin according to the present disclosure, to provide the mechanical stability and the chemical stability to the cation exchange resin.

[Chemical Formula 7]

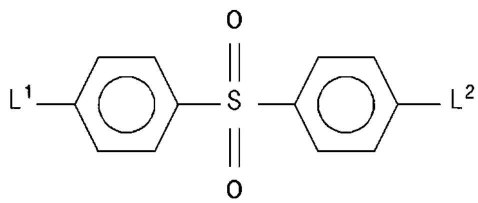

In Chemical Formula 7, each of $L^1$ and $L^2$, which is a leaving group removed during the polymerization reaction, may be independently a halogen element such as F, Cl, Br, or I, or a hydrogen atom, and preferably, a halogen element.

Specifically, the first monomer may be diphenyl sulfone, 4,4'-dihalogen diphenyl sulfone, or a combination thereof. Among them, 4,4'-dichlorodiphenyl sulfone (DCDPS) is particularly preferable.

Preferably, a compound having a purity of at least 99% may be used as the first monomer. When a compound having a purity of less than 99% is used as the first monomer, a side reaction may occur due to impurities.

Meanwhile, the first monomer may be included in an amount ranging from 10 parts by weight to 40 parts by weight, preferably from 20 parts by weight to 35 parts by weight, and more preferably from 22 parts by weight to 35 parts by weight, based on 100 parts by weight of a total weight of the first to third monomers combined.

When the content of the first monomer among the total monomers satisfies the above range, the proportion of the second repeating unit in the cation exchange resin may be appropriately formed, such that excellent mechanical properties and excellent chemical stability is secured.

Next, the second monomer is a compound which constitutes the first repeating unit in the cation exchange resin according to the present disclosure and is intended to impart cation exchange performance to the cation exchange resin, and is represented by Chemical Formula 8 below.

[Chemical Formula 8]

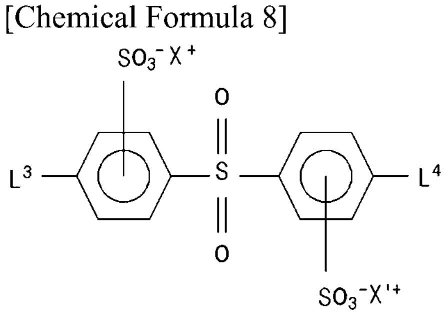

In Chemical Formula 8, each of X and X' is independently hydrogen or an alkali metal species (E). In this case, the

alkali metal species (E) may be Li, Na, or K, and is preferably Na or K.

Each of $L^3$ and $L^4$ is a leaving group removed during a polymerization reaction, and may each independently be a halogen element such as F, Cl, Br, or I, and is preferably an F element or a Cl element.

The second monomer may be prepared, for example, by sulfonating the first monomer as described in Reaction Formula 1 below, and it is preferable to use a compound having a purity of at least 97%. When a compound having a purity of less than 97% is used as the second monomer, a side reaction may occur due to impurities.

[Reaction Formula 1]

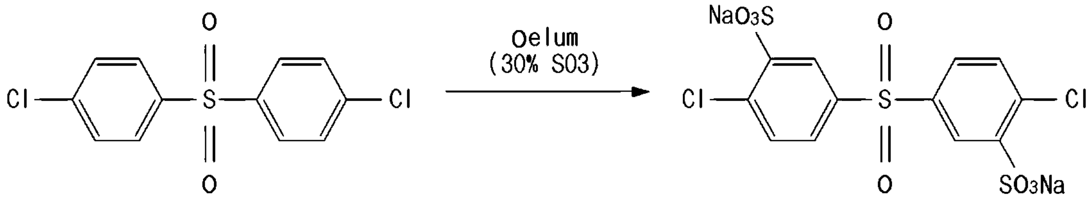


Specific examples of the second monomer include disodium 3,3'-disulfonated-4,4'-dichlorodiphenylsulfone (SDCDPS), disodium 3,3'-disulfonated-4,4'-difluorodiphenylsulfone (SDFDPS), or a combination thereof. Among these, disodium 3,3'-disulfonated-4,4'-dichlorodiphenylsulfone (SDCDPS) is particularly preferable.

The second monomer may be included in an amount ranging from 20 parts by weight to 55 parts by weight, preferably from 25 parts by weight to 40 parts by weight, and more preferably from 30 parts by weight to 40 parts by weight, based on 100 parts by weight of a total weight of the first to third monomers combined. When a content of the second monomer among the total monomers satisfies the above range, a content of a sulfonic acid group in the cation exchange resin is appropriately formed, such that excellent ion exchange capacity may be realized.

Next, the third monomer, which is to improve chemical stability and mechanical properties of the cation exchange resin by reacting with the first monomer and the second monomer to form a thioether bond between the first repeating unit and the second repeating unit, is a compound represented by Chemical Formula 9 or Chemical Formula 10 below.

[Chemical Formula 9]

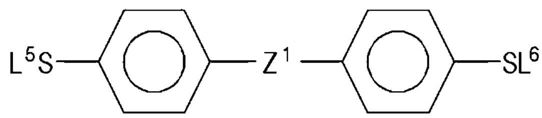

In Chemical Formula 9, $Z^1$ is -S-, -O-, -C(O)-, or -C($R^1R^2$)-, and is preferably -S- or -O-. Each of $R^1$ and $R^2$ may independently be a hydrogen atom, a $C_1$ to $C_2$ alkyl group, a halogen, or a halogen-substituted $C_1$ to $C_2$ alkyl group.

Each of $L^5$ and $L^6$ which is a leaving group removed during a polymerization reaction, may independently be a cation of an alkali metal species (E) or a hydrogen atom, and preferably a hydrogen element.

[Chemical Formula 10]

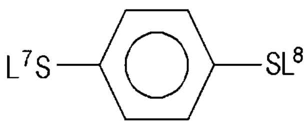

In Chemical Formula 10, each of $L^7$ and $L^8$, which is a leaving group removed during a polymerization reaction, may independently be a cation of an alkali metal species (E) or a hydrogen atom, and preferably a hydrogen element.

For example, the third monomer includes 4,4'-thiobisbenzenethiol (TBBT), biphenyl-4,4'-dithiol, 4,4'-oxydi(benzenethiol), bis(4-mercaptophenyl)sulfone, and benzene-1,4-dithiol. Among them, 4,4'-thiobisbenzenethiol (TBBT) is particularly preferable.

It is preferable to use a compound having a purity of at least 98% as the third monomer. When a compound having a purity of less than 98% is used as the third monomer, a side reaction may occur due to impurities.

The third monomer may be included in an amount ranging from 30 parts by weight to 60 parts by weight, preferably from 30 parts by weight to 50 parts by weight, and more preferably from 35 parts by weight to 50 parts by weight, based on 100 parts by weight of a total weight of the first to third monomers combined. When the content of the third monomer among the total monomers satisfies the above range, the first monomer and the second monomer may be bonded through a thioether group having high bonding strength, such that the cation exchange resin having excellent

mechanical properties and excellent chemical stability is prepared.

Meanwhile, the reaction mixture may include the first monomer and the second monomer at a molar ratio ranging from 30:70 to 70:30, preferably from 40:60 to 70:30, and more preferably from 50:50 to 70:30. When the first monomer and the second monomer are included in the reaction mixture at the above molar ratio, a molar ratio of the first repeating unit and the second repeating unit in the cation exchange resin is appropriately formed, such that excellent ion exchange performance, excellent chemical stability, and excellent swelling characteristics are exhibited.

Next, the polymerization solvent, which is to dissolve the first to third monomers to allow a polymerization reaction to proceed, is not limited in the type thereof, as long as the polymerization solvent dissolves the monomers. For example, the polymerization solvent may include N-methyl-2-pyrrolidone (NMP), toluene, dimethylacetamide (DMAc), N,N-dimethylformamide, dimethyl sulfoxide, or 1,3-dimethyl-2-imidazolidinone alone or in a combination form. Preferably, the polymerization solvent may be N-methyl-2-pyrrolidone, toluene, dimethylacetamide, or the combination thereof.

Meanwhile, the polymerization solvent preferably has high purity and low moisture content. When the purity of the polymerization solvent is low, the polymerization reaction may be adversely affected by impurities. When the moisture content is high, the degree of polymerization of the resin may be reduced. Specifically, the polymerization solvent having the purity of at least 99% and a moisture content of less than 500 ppm may be used.

The polymerization solvent may be included in an amount allowing a solid content concentration and viscosity sufficient for the smooth polymerization reaction.

For example, the polymerization solvent may be included in an amount allowing the solid content concentration in the reaction mixture to range from 10 wt% to 50 wt%, preferably from 15 wt% to 40 wt%, and more preferably from 15 wt% to 35 wt%.

Meanwhile, if necessary, the reaction mixture may further include a catalyst. The catalyst, which functions to activate the polymerization reaction, may include, for example, $K_2CO_3$, $CaCO_3$, or $CeCO_3$, alone or in a combination form. It is preferable to use a catalyst having a purity of at least 99%, because when a catalyst having low purity is used, a side reaction may occur due to impurities.

Meanwhile, the catalyst may be included in an amount ranging from 15 parts by weight to 35 parts by weight, preferably from 20 parts by weight to 35 parts by weight, and more preferably from 20 parts by weight to 30 parts by weight, based on 100 parts by weight of a total weight obtained by combining the first monomer to the third monomer. When a content of the catalyst satisfies the above range, the excellent polymerization reaction accelerating effect is exhibited

Next, the reaction mixture is polymerized to synthesize the cation exchange resin (step S2).

The polymerization reaction may be performed in the presence or absence of the catalyst, and a polymerization temperature may range from 150°C to 200°C, preferably from 160°C to 195°C, and more preferably from 170°C to 195°C. When the polymerization reaction is performed within the above temperature range, polymerization proceeds while minimizing occurrence of side reactions.

Meanwhile, when the cation exchange resin is synthesized through the polymerization reaction, a process form obtaining a solid-phase cation exchange resin may be performed if necessary by separating, washing, and drying the synthesized resin (step S3).

Specifically, the synthesized resin is precipitated in deionized water or an isopropyl alcohol solvent, the precipitated resin is separated from a solution, and the separated resin is washed and dried to obtain the solid-phase cation exchange resin.

Thereafter, the solid-phase cation exchange resin is redissolved in a solvent to form a liquid-phase cation exchange resin composition (step S4).

As the solvent for the redissolution, for example, N-methyl-2-pyrrolidone (NMP), dimethylacetamide (DMAc), N,N-dimethylformamide, dimethyl sulfoxide, or 1,3-dimethyl-2-imidazolidinone may be used, and preferably N-methyl-2-pyrrolidone (NMP), dimethylacetamide (DMAc), or a mixture thereof may be used.

Meanwhile, the liquid-phase cation exchange resin composition may have a solid content concentration ranging from 10 wt% to 30 wt%, preferably from 20 wt% to 30 wt%.

In addition, the liquid-phase cation exchange resin composition may have a viscosity ranging from 1,500 cP to 50,000 cP, preferably from 2,000 cP to 30,000 cP, where the viscosity is measured at 25°C using a Brookfield viscometer.

When the solid content concentration and the viscosity of the liquid-phase cation exchange resin composition satisfy the above ranges, moldability and/or coating property during the preparation of the ion exchange membrane are excellent.

When the above process is additionally performed, KCl salt, moisture, and/or gas generated during the polymerization reaction in the process are removed, such that the ion exchange performance, the chemical stability, and the mechanical properties of the cation exchange resin are further improved, and viscosity of the cation exchange resin is controlled through the redissolution process, thereby improving moldability of the ion exchange membrane.

In the method for preparing the cation exchange resin according to the present disclosure, since lower-cost monomers are used, lower preparation costs are required. Accordingly, the more excellent economic efficiency is exhibited, as compared to a conventionally commercialized fluorine-based ion exchange resin.

Ion exchange membrane

Hereinafter, the ion exchange membrane according to the present disclosure will be described.

The ion exchange membrane according to the present disclosure may be an ion exchange membrane for separating an alkali metal species (M), such that alkali metal species (M) is separated, and includes the cation exchange resin and/or the cation exchange resin composition according to the present disclosure. In this case, the alkali metal species (M) may be Li, Na, or K, and particularly Li among them.

For example, the ion exchange membrane may be a molded membrane of the cation exchange resin composition according to the present disclosure, and the molded membrane may be prepared using membrane-forming manners, such as a dipping manner, a casting manner, or a coating manner, well known in the art.

Specifically, the ion exchange membrane according to the present disclosure may include the cation exchange resin according to the present disclosure, which includes the first repeating unit represented by [Chemical Formula 1] and the second repeating unit represented by [Chemical Formula 2], and may further include a support if necessary.

For example, the support may include an inorganic fiber, The inorganic fiber may include glass wool, glass mat, or ceramic wool, but the present disclosure is not limited thereto.

Alternatively, the support may be a porous support formed of a polymer material. For example, the porous support may be a woven fabric or a nonwoven fabric including at least one selected from polyethylene, polypropylene, polybenzimidazole, polyvinylidene fluoride, polytetrafluoride, polyphenylene sulfide, polyether ether ketone, polyether sulfone, polyarylene ether sulfone, polyether ketone, polyamide imide, and polyether imide.

In this case, the ion exchange membrane may be a structure in which the cation exchange resin according to the present disclosure is coated on the porous support.

The thickness of the cation exchange resin layer coated on the porous support may range from 20 $\mu$m to 300 $\mu$m, preferably from 20 $\mu$m to 200 $\mu$m, and more preferably from 30 $\mu$m to 150 $\mu$m. When the thickness satisfies the above range, the membrane durability is maintained while the membrane resistance is prevented from excessively being increased.

The ion exchange membrane for separating the alkali metal species (M) according to the present disclosure may be manufactured at low cost while exhibiting performance equivalent to that of a conventionally commercialized fluorine-based ion exchange membrane, and thus economic efficiency is excellent.

Specifically, the ion exchange membrane according to the present disclosure may have an ion exchange capacity (IEC) ranging from 1.0 mEq/g to 2.0 mEq/g, preferably from 1.1 mEq/g to 1.8 mEq/g, and more preferably from 1.1 mEq/g to 1.7 mEq/g.

In addition, the ion exchange membrane according to the present disclosure may have a hydrogen ion conductivity at 25°C ranging from 0.02 S/cm to 0.12 S/cm, preferably from 0.02 S/cm to 0.10 S/cm, and more preferably from 0.02 S/cm to 0.09 S/cm. When the ion exchange capacity and the hydrogen ion conductivity of the ion exchange membrane satisfy the above ranges, ions of the alkali metal species (M) may be effectively separated, and membrane electrical resistance may be minimized.

In addition, the ion exchange membrane for separating the alkali metal species (M) according to the present disclosure exhibits excellent chemical stability, particularly excellent alkali resistance, such that damage and loss of the membrane are reduced even when pH fluctuates, and the membrane form may be stably maintained.

In addition, the ion exchange membrane for separating the alkali metal species (M) according to the present disclosure exhibits excellent durability due to low swelling even when exposed to moisture. Specifically, when the ion exchange membrane is immersed in water, a degree of swelling, which is a thickness change rate of the membrane before and after immersion, may be at most 40%, preferably range from 5% to 40%, more preferably range from 5% to 35%, and still more preferably from 5% to 30%. When the swelling satisfies the above range, performance degradation due to membrane deformation may be minimized.

The ion exchange membrane according to the present disclosure as described above may be usefully applied to an electrodialysis apparatus for lithium extraction.

Electrodialysis apparatus for lithium extraction.

Hereinafter, an electrodialysis apparatus for lithium extraction according to the present disclosed will be described.

The electrodialysis apparatus for lithium extraction according to the present disclosure may include, the ion exchange membrane for separating the alkali metal species (M) according to the present disclosure, as a cation exchange membrane. When the ion exchange membrane according to the present disclosure is applied to the electrodialysis apparatus for lithium extraction, excellent durability may be secured through a low-cost preparing process, as compared to that a fluorine-based ion exchange membrane is applied. In addition, the ion exchange membrane according to the present disclosure may secure the economic efficiency in separating and concentrating lithium hydroxide (LiOH), as

compared to a high-price fluorine-based ion exchange membrane.

The electrodialysis apparatus for lithium extraction is an apparatus which selectively passes ions through the ion exchange membrane within an electric field to separate lithium ions from a solution. FIG. 2 illustrates an example of the electrodialysis apparatus for lithium extraction according to the present disclosure. Hereinafter, the electrodialysis apparatus for lithium extraction according to the present disclosure will be described with reference to FIG. 2.

Referring to FIG. 2, an electrodialysis apparatus 100 for lithium extraction according to the present disclosure includes an oxidation electrode 10 and a reduction electrode 20 which are disposed to face each other, cation exchange membranes 30 and anion exchange membranes 40, which that are alternately interposed between the oxidation electrode 10 and the reduction electrode 20, and a spacer 50 which are interposed between the cation exchange membrane 30 and the anion exchange membrane 40. In this case, the cation exchange membrane 30 is an ion exchange membrane for separating alkali metal species (M) according to the present disclosure. Meanwhile, bipolar membranes 60 and 70 may be further interposed between the electrode and the ion exchange membrane

The oxidation electrode 10 and the reduction electrode 20 are provided to supply electromotive force to the electrodialysis apparatus, in which the oxidation electrode 10 serving as a cathode provides a force, which attracts anions from treated water subjected to electrodialysis to pass through the anion exchange membrane 40, and the reduction electrode 20 serving as an anode provides a force which attracts cations from the treated water to pass through the cation exchange membrane 30.

The cation exchange membranes 30 and the anion exchange membranes 40 are provided to selectively pass and separate cations and anions, respectively. A plurality of cation exchange membranes 30 and a plurality of anion exchange membranes 40 are alternately interposed between the oxidation electrode 10 and the reduction electrode 20. In this case, the cation exchange membrane 30 is an ion exchange membrane including the cation exchange resin according to the present disclosure.

The spacer 50 is interposed between the cation exchange membrane 30 and the anion exchange membrane 40 to separate the cation exchange membrane 30 and the anion exchange membrane 40 and to secure a space through which treated water may pass, and includes a non-insulating material which allows movement of ions and electrolytes.

Meanwhile, the bipolar membranes 60 and 70 are membranes in a form in which a cation exchange layer and an anion exchange layer are combined, and are disposed in a reverse-bias state in which the cation exchange layer of the bipolar membrane is disposed toward the anode and the anion exchange layer is disposed toward the cathode. The bipolar membranes split water molecules into hydrogen ions and hydroxide ions. When the bipolar membranes are provided, the anions and the cations separated from the ion exchange membranes may react with $H^+$ ions and $OH^-$ ions separated from the bipolar membranes, such that the anions and the cations are converted into compound forms which are easy to recover and/or use.

Next, a manner for extracting lithium using the electrodialysis apparatus 100 as described above will be described.

First, treated water (F) including lithium is introduced between the cation exchange membrane 30 and the anion exchange membrane 40, and water is introduced between the bipolar membrane 60 and the electrodes 10 and 20. In this case, the treated water (F) including lithium may include, for example, lithium sulfate ($LiSO_4$) derived from waste liquid produced from a waste lithium secondary battery or a lithium secondary battery manufacturing process, but the present disclosure is not limited thereto.

After the treated water (F) and the water are introduced, or simultaneously with the introduction, a voltage is applied to the oxidation electrode 10 and the reduction electrode 20. When the voltage is applied to the electrodes, water is decomposed in the bipolar membrane to generate $H^+$ ions and $OH^-$ ions, lithium ions ($Li^+$) in the treated water move toward the reduction electrode 20 while passing through the cation exchange membrane 30, and anions (for example, $SO_4^{2-}$) included in the treated water move toward the oxidation electrode 10 while passing through the anion exchange membrane 40.

Lithium ions ($L^{i-}$) that have moved toward the oxidation electrode 10 are combined with $OH^-$ ions produced in the bipolar membrane to generate LiOH (P), and lithium may be extracted from the treated water by recovering the LiOH. Meanwhile, anions ($SO_4^{2-}$), which moves toward the reduction electrode 20 may be combined with $H^+$ ions, and a product formed by the combination of the anions and the $H^+$ ions, and residual treated water may be discharged to the outside of the electrodialysis apparatus separately from LiOH.

[Mode for Invention]

Hereinafter, examples of the present disclosure will be described in detail so that those skilled in the art to which the present disclosure pertains may readily reproduce the present disclosure. However, the present disclosure may be implemented in various forms, and is limited to embodiments described herein.

<u>Example and Comparative Example</u>

Example 1

<Preparation of cation exchange resin>

A gas inlet, a Dean-Stark trap, a condenser, a thermometer, and a stirrer were installed in a 500 mL round flask, and the flask was left for 30 minutes under a nitrogen atmosphere.

18.56 g of DCDPS, 13.61 g of SDCDPS, and 23.10 g of TBBT serving as monomers, 14.46 g of $K_2CO_3$ serving as a catalyst, and 207 g of NMP serving as a solvent were added into the round flask, and the mixture was stirred to completely dissolve the components, thereby preparing a reaction mixture.

Thereafter, the reaction mixture was heated to 150°C for over 1 hour, and then heated to 175°C for over 2 hours, and the polymerization reaction was maintained while the temperature was maintained until a desired viscosity was reached.

Thereafter, a salt by-product was removed through filtration, and the cation exchange resin was obtained by precipitation in water. The obtained resin was sequentially washed with water and isopropyl alcohol (IPA) to remove residual impurities, and then dried in a vacuum dryer at 80°C for 24 hours to obtain a solid-phase cation exchange resin (sulfonated polythioether sulfone, SPTES). Thereafter, the solid-phase cation exchange resin was dissolved in an NMP solvent such that a solid content concentration became 20 wt%, thereby obtaining a transparent liquid-phase cation exchange resin composition.

<Preparation of ion exchange membrane>

The liquid cation exchange resin composition was cast on a glass plate using a doctor blade, and then dried in an oven at 80°C for 12 hours, thereby preparing the ion exchange membrane.

Example 2

A cation exchange resin composition and an ion exchange membrane including the same were prepared in the same manner as in Example 1, except that 15.91 g of DCDPS and 18.15 g of SDCDPS were introduced when the cation exchange resin was prepared.

Example 3

A cation exchange resin composition and an ion exchange membrane including the same were prepared in the same manner as in Example 1, except that 13.26 g of DCDPS and 22.68 g of SDCDPS were introduced when the cation exchange resin was prepared

Comparative Example 1

A cation exchange resin composition and an ion exchange membrane including the same were prepared in the same manner as in Example 1, except that 18.56 g of DCDPS, 13.61 g of SDCDPS, and 17.21 g of BP (biphenol) were introduced as monomers to prepare a sulfonated polyethersulfone (SPES) resin, in the preparation of the cation exchange resin.

Comparative Example 2

A cation exchange resin composition and an ion exchange membrane including the same were prepared in the same manner as in Example 1, except that 15.91 g of DCDPS, 18.15 g of SDCDPS, and 17.21 g of BP (biphenol) were introduced as monomers to prepare sulfonated polyethersulfone (SPES), in the preparation of the cation exchange resin.

Comparative Example 3

The ion exchange membrane was prepared using a commercially available sulfonated PPO ion exchange resin (InnoSol-C100 by InnoChemTech.).

The composition of the reaction solution used for preparing the cation exchange resin in Examples 1 to 3 and Comparative Examples 1 to 2 is shown in Table 1 below.

[Table 1]

| | | Example 1 | | Example 2 | | Example 3 | | Comparative Example 1 | | Comparative Example 2 | |
|---|---|---|---|---|---|---|---|---|---|---|---|
| | | Weight(g) | Mole% | Weight( g) | Mol% | Weight (g) | Mol % | Weight (g) | Mol% | Weight (g) | Mol % |
| Monomer | DCDPS | 18.56 | 35.0 | 15.91 | 30.0 | 13.26 | 25.0 | 18.56 | 35.0 | 15.91 | 30.0 |
| | SDCDPS | 13.61 | 15.0 | 18.15 | 20.0 | 22.68 | 25.0 | 13.61 | 15.0 | 18.15 | 20.0 |
| | TBBT | 23.10 | 50.0 | 23.10 | 50.0 | 23.1 | 50.0 | - | - | - | - |
| | BP | - | - | - | - | - | - | 17.21 | 50.0 | 17.21 | 50.0 |
| Catalyst | $K_2CO_3$ | 14.46 | - | 14.46 | - | 14.46 | - | 14.46 | - | 14.46 | - |
| Solvent | NMP | 207 | - | 207 | - | 207 | - | 207 | - | 207 | - |

In Table 1, the mol% refers to the mol% of each monomer relative to the total number of moles of all monomers in the reaction solution. DCDPS is dichlorodiphenyl sulfone (4,4'-Dichlorodiphenyl sulfone, CAS No. 80-07-9, molecular weight: 287.15 g/mol), SDCDPS is disodium disulfonated dichlorodiphenyl sulfone (Disodium 3,3'-disulfonated-4,4'-dichlorodiphenylsulfone, CAS No. 51698-33-0, molecular weight: 491.25 g/mol), TBBT is thiobisbenzenethiol (4,4'-Thiobisbenzenethiol, CAS No. 19362-77-7, molecular weight: 250.39 g/mol), BP is biphenol (molecular weight: 186.21 g/mol). NMP is N-methylpyrrolidone.

Experimental Example 1: Evaluation of ion exchange capacity

The ion exchange membranes prepared according to Examples 1 to 3 and Comparative Examples 1 to 3 were immersed in a 1.5 M sulfuric acid aqueous solution at a room temperature for 24 hours, washed with deionized water, and then dried in a vacuum oven at 80°C. The dried membranes were cut into samples having a width of 1 cm and a length of 3 cm, the weights of the samples were measured, and the samples were immersed in 100 mL of a 0.01 M NaCl aqueous solution for 24 hours. Thereafter, titration was performed with a 0.01 M NaOH aqueous solution up to pH 7 using an automatic acid-base titrator (Metrohm, 888 Titrando). The ion exchange capacity (IEC) was measured by substituting the sample weight and the volume of the NaOH aqueous solution used for the titration into Equation (1) below. The measurement results are shown in Table 2 below.

Equation (1):

$$\mathrm{IEC}\ (\mathrm{meq/g}) = \frac{V \times C}{w}$$

(v: the volume (mL) of a NaOH aqueous solution used for the titration, c: mole concentration (M) of a NaOH aqueous solution, w: the sample weight (g))

Experimental Example 2: Evaluation of hydrogen ion conductivity

The ion exchange membranes prepared in Examples 1 to 3 and Comparative Examples 1 to 3 were immersed in a 1.5 M sulfuric acid aqueous solution at room temperature for 24 hours, washed with deionized water, and then stored in a state of being immersed in deionized water. Then, after measuring the thickness of the immersed ion exchange membrane, the ion exchange membrane was mounted in a conductivity measurement cell, placed in a 25°C oven, and connected to an AC impedance measurement device (Neoscience; VSP-300), thereby evaluation the ion conductivity of hydrogen ion. The measurement results are shown in Table 2 below.

[Table 2]

| | Ion exchange capacity (IEC)[mEq/g] | Hydrogen ion conductivity [S/cm] |
|---|---|---|
| Example 1 | 1.1 | 0.021 |

(continued)

| | Ion exchange capacity (IEC)[mEq/g] | Hydrogen ion conductivity [S/cm] |
|---|---|---|
| Example 2 | 1.5 | 0.054 |
| Example 3 | 1.7 | 0.082 |
| Comparative Example 1 | 1.3 | 0.025 |
| Comparative Example 2 | 1.7 | 0.061 |
| Comparative Example 3 | 1.6 | 0.035 |

Referring to [Table 2], it may be confirmed that the ion exchange capacity and the hydrogen ion conductivity according Examples 1 to 3 are at a level equivalent to those of Comparative Examples 1 to 3. In addition, it may be confirmed that, as the mol% of SDCDPS in the reaction solution increases, the ion exchange capacity and the hydrogen ion conductivity increase, for Examples 1 to 3.

Example 3: Evaluation of pH stability

After preparing solutions having pH ranging from 1 to 14 using aqueous HCl and KOH solutions, the ion exchange membranes prepared according to Examples 1 to 3 and Comparative Examples 1 to 3 was respectively immersed in the pH solutions. After 30 days had elapsed, whether the membrane shape was maintained and the remaining amount of compounds were measured, thereby evaluating pH stability for each ion exchange membrane. The result was shown in following Table 3.

[Table 3]

| | pH stability |
|---|---|
| Example 1 | O |
| Example 2 | O |
| Example 3 | O |
| Comparative Example 1 | X |
| Comparative Example 2 | X |
| Comparative Example 3 | X |

In [table 3], the mark "O" refers to that the ion exchange membrane is maintained in the shape without being broken at each pH, and a residual amount of a compound is at least 80%. The mark "X" indicates that the ion exchange membrane is not maintained in the shape and broken at each pH, or the residual amount of the compound is at most 60%. Referring to [Table 3], it may be confirmed that the pH stability of the ion exchange membrane according to Examples 1 to 3 is superior to Comparative Example 1 to 3.

Experimental Example 4: Swelling Evaluation

After each of the ion exchange membranes prepared according to Examples 1 to 3 and Comparative Examples 1 to 3 was immersed in water at 25°C for 48 hours, a volume change rate of the ion exchange membrane before and after the immersion was measured, and a degree of swelling (%), which is defined by the following Equation (2), was evaluated.

Degree of swelling (%) = {( volume of ion exchange membrane after immersion - volume of ion exchange membrane before immersion) / volume of ion exchange membrane before immersion} $\times$ 100 Equation (2):

The measurement result is shown in [Table 4] below.

[Table 4]

| | Swelling[%] |
|---|---|
| Example 1 | 10 |

(continued)

| | Swelling[%] |
|---|---|
| Example 2 | 16 |
| Example 3 | 28 |
| Comparative Example 1 | 25 |
| Comparative Example 2 | 35 |
| Comparative Example 3 | 42 |

Referring to [Table 4], it may be confirmed that the ion exchange membranes prepared according to Examples 1 to 3 exhibit superior swelling characteristics, as compared with the ion exchange membranes prepared according to Comparative Examples 1 to 2. In addition, for the ion exchange membrane of Comparative Example 1, which is prepared using a cation exchange resin employing biphenol instead of a thiol-based monomer, although the contents of DCDPS and SDCDPS are equal to each other, the swelling characteristics are shown to be degraded, as compared with the ion exchange membrane of Example 1, which is prepared using the cation exchange resin employing the thiol-based monomer.

## Claims

**1.** A cation exchange resin comprising:

a first repeating unit represented by following Chemical Formula 1; and
a second repeating unit represented by following Chemical Formula 2.

[Chemical Formula 1]

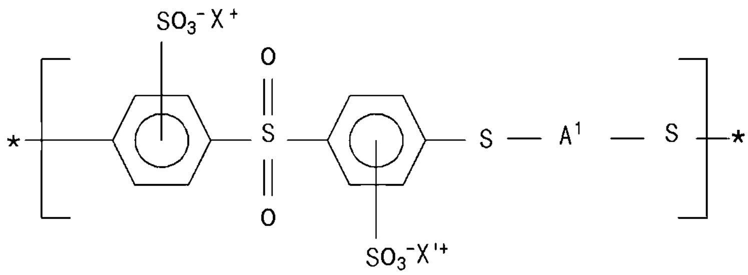

(in Chemical Formula 1, each of X and X' is independently hydrogen or an alkali metal species (E), and $A^1$ is represented by Chemical Formula 3 or Chemical Formula 4 below)

[Chemical Formula 2]

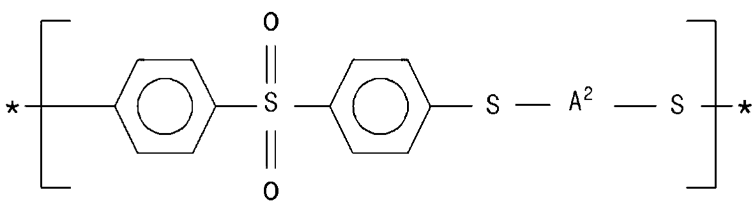

(in Chemical Formula 2, $A^2$ is represented by Chemical Formula 3 or Chemical Formula 4 below)

[Chemical Formula 3]

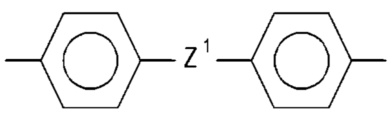

(in Chemical Formula 3, $Z^1$ is -S-, -O-, -C(O)-, or -C($R^1R^2$)-, and each of $R^1$ and $R^2$ are independently hydrogen, a $C_1$ to $C_2$ alkyl group, a halogen, or a halogen-substituted $C_1$ to $C_2$ alkyl group)

[Chemical Formula 4]

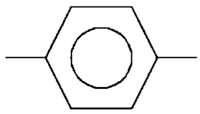

2. The cation exchange resin of claim 1, wherein the first repeating unit is represented by Chemical Formula 1A below.

[Chemical Formula 1A]

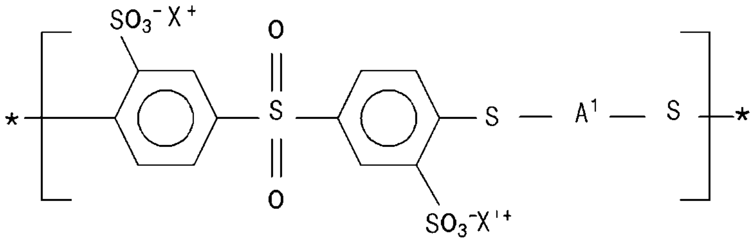

(in Chemical Formula 1A, each of X and X' is independently hydrogen or an alkali metal species (E), and $A^1$ is represented by Chemical Formula 3 or Chemical Formula 4 below)

[Chemical Formula 3]

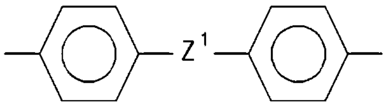

(in Chemical Formula 3, $Z^1$ is -S-, -O-, -C(O)-, or -C($R^1R^2$)-, and each of $R^1$ and $R^2$ are independently hydrogen, a $C_1$ to $C_2$ alkyl group, a halogen, or a halogen-substituted $C_1$ to $C_2$ alkyl group)

[Chemical Formula 4]

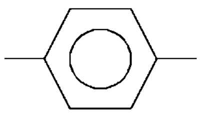

3. The cation exchange resin of claim 1, wherein the $Z^1$ is -S- or -O-.

4. The cation exchange resin of claim 1, wherein the $A^1$ in Chemical Formula 1 and the $A^2$ in Chemical Formula 2 are represented by Chemical Formula 3.

5. The cation exchange resin of claim 1, wherein each the $A^1$ in the Chemical Formula 1 and the $A^2$ in the Chemical Formula 2 are represented by Chemical Formula 4.

6. The cation exchange resin of claim 1, wherein the cation exchange resin comprises a first repeating unit and a second repeating unit in a molar ratio of 30:70 to 70:30.

7. The cation exchange resin of claim 1, wherein the cation exchange resin includes a repeating unit represented by Chemical Formula 5 below,

[Chemical Formula 5]

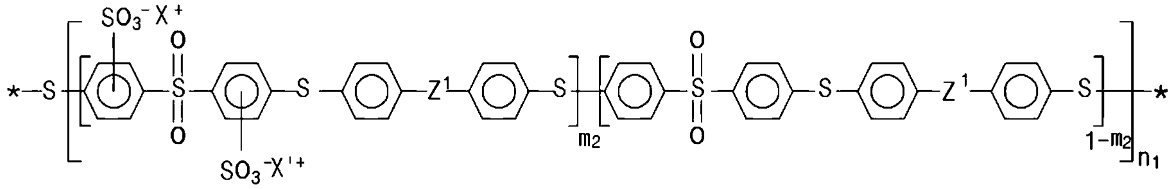

(in Chemical Formula 5, each of X and X' is independently hydrogen or an alkali metal species (E),
$Z^1$ is -S-, -O-, -C(O)-, or -C($R^1R^2$)-,
each of $R^1$ and $R^2$ is independently a hydrogen atom, a $C_1$ to $C_2$ alkyl group, a halogen, or a halogen-substituted $C_1$ to $C_2$ alkyl group,
$m_1$ is a positive number greater than 0 and less than or equal to 1, and
$n_1$ is an integer ranging from 50 to 1,000).

**8.** The cation exchange resin of claim 7, wherein $m_1$ is a positive number ranging from 0.3 to 0.7.

**9.** The cation exchange resin of claim 1, wherein the cation exchange resin includes a unit represented by Chemical Formula 6 below.

[Chemical Formula 6]

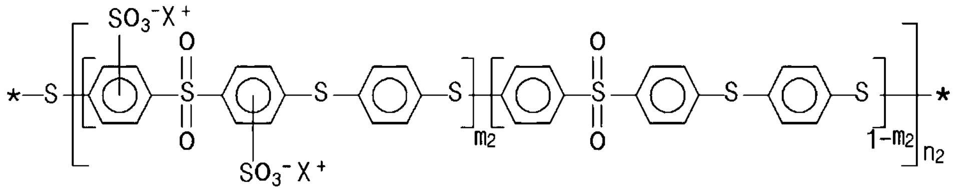

(in Chemical Formula 6,
each of X and X' is independently hydrogen or an alkali metal species (E),
$m_2$ is a positive number greater than 0 and less than or equal to 1,
$n_2$ is an integer ranging from 50 to 1,000).

**10.** The cation exchange resin of claim 9, wherein the $m_2$ is a positive number ranging from 0.3 to 0.7.

**11.** The cation exchange resin of claim 1, wherein the alkali metal species (E) is sodium (Na) or potassium (K).

**12.** The cation exchange resin of claim 1, wherein the cation exchange resin has a weight-average molecular weight ranging from 50,000 g/mol to 500,000 g/mol.

**13.** A cation exchange resin composition comprising:
a cation exchange resin according to any one of claims 1 to 12.

**14.** An ion exchange membrane for separating an alkali metal species (M), which is obtained as a formed membrane of the cation exchange resin composition of claim 13.

**15.** An ion exchange membrane for separating an alkali metal species (M), the ion exchange membrane comprising:
a cation exchange resin according to any one of claims 1 to 12.

**16.** The ion exchange membrane of claim 15, wherein the ion exchange membrane for separating the alkali metal species (M) further includes a support.

**17.** The ion exchange membrane of claim 16, wherein the support includes inorganic fiber, and
wherein the cation exchange resin is immersed into the support.

**18.** The ion exchange membrane of claim 16, wherein the inorganic fiber includes at least one selected from the group

consisting of a glass mat, glass wool, and ceramic wool.

**19.** The ion exchange membrane of claim 16, wherein the support is a porous polymer film, and wherein the cation exchange resin is coated on the porous support.

**20.** The ion exchange membrane of claim 19, wherein a thickness of the cation exchange resin coated on the porous support ranges from 20 $\mu$m to 300 $\mu$m.

**21.** The ion exchange membrane of claim 15, wherein the ion exchange membrane has an ion exchange capacity (IEC) ranging from 1.0 mEq/g to 2.0 mEq/g.

**22.** The ion exchange membrane of claim 15, wherein the ion exchange membrane has a hydrogen ion conductivity ranging from 0.02 S/cm to 0.12 S/cm at 25°C.

**23.** The ion exchange membrane of claim 15, wherein a degree of a swelling, which is represented by Equation (2) below and measured by immersing the ion exchange membrane in water at 25°C for 48 hours, is at most 40%,

Degree of swelling (%) = {(volume of ion exchange membrane after immersion - volume of ion exchange membrane before immersion) / volume of ion exchange membrane before immersion} $\times$ 100.    Equation (2):

**24.** The ion exchange membrane of claim 15, wherein the alkali metal species (M) is lithium (Li).

**25.** An electrodialysis apparatus for lithium extraction, the electrodialysis apparatus comprising: an ion exchange membrane for separating an alkali metal species (M) according to claim 15.

**26.** A method for preparing a cation exchange resin, comprising:

making a polymerization reaction for a reaction mixture including a first monomer represented by Chemical Formula 7; a second monomer represented by Chemical Formula 8; a third monomer represented by Chemical Formula 9 or Chemical Formula 10, and a polymerization solvent.

[Chemical Formula 7]

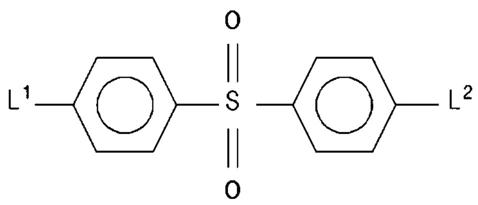

(in Chemical Formula 7, each of $L^1$ and $L^2$, which is a leaving group removed during the polymerization reaction, is independently a halogen element),

[Chemical Formula 8]

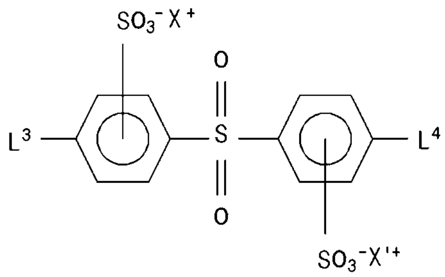

(in Chemical Formula 8,

each of X and X' is independently hydrogen or an alkali metal species (E), and each of $L^3$ and $L^4$, which is a leaving group removed during the polymerization reaction, is independently a halogen element),

[Chemical Formula 9]

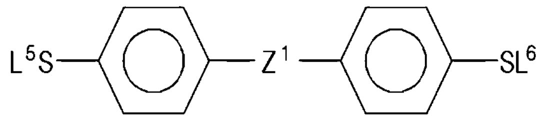

(in Chemical Formula 9,
$Z^1$ is -S-, -O-, -C(O)-, or $-C(R^1R^2)-$,
each of $R^1$ and $R^2$ is independently hydrogen, a $C_1$ to $C_2$ alkyl group, halogen, or a halogen-substituted $C_1$ to $C_2$ alkyl group, and
each of $L^5$ and $L^6$, which is a leaving group removed during the polymerization reaction, is independently a cation of an alkali metal species (E), or a halogen element),

[Chemical Formula 10]

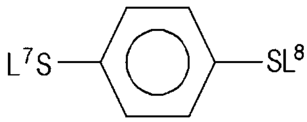

(in Chemical Formula 10,
each of $L^7$ and $L^8$, which is a leaving group removed during the polymerization reaction, is independently a cation of an alkali metal species (E) or a hydrogen atom).

**27.** The method for preparing a cation exchange resin of claim 26, wherein each of the $L^5$, the $L^6$, the $L^7$, and the $L^8$ is a hydrogen atom.

**28.** The method for preparing a cation exchange resin of claim 26, wherein the reaction mixture includes the first monomer and the second monomer at a molar ratio ranging from 30:70 to 70:30.

**29.** The method for preparing a cation exchange resin of claim 26, wherein the polymerizing is performed at a temperature of at least 150°C and at most 200°C.

**30.** The method for preparing a cation exchange resin of claim 26, wherein the polymerization reaction is performed in presence of a catalyst.

【Fig. 1】

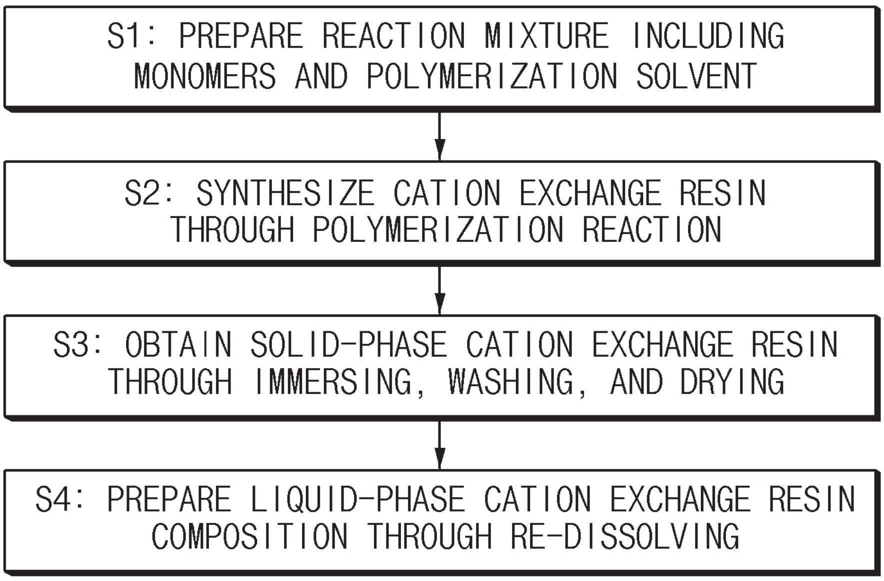
S1: PREPARE REACTION MIXTURE INCLUDING MONOMERS AND POLYMERIZATION SOLVENT
S2: SYNTHESIZE CATION EXCHANGE RESIN THROUGH POLYMERIZATION REACTION
S3: OBTAIN SOLID-PHASE CATION EXCHANGE RESIN THROUGH IMMERSING, WASHING, AND DRYING
S4: PREPARE LIQUID-PHASE CATION EXCHANGE RESIN COMPOSITION THROUGH RE-DISSOLVING

【Fig. 2】

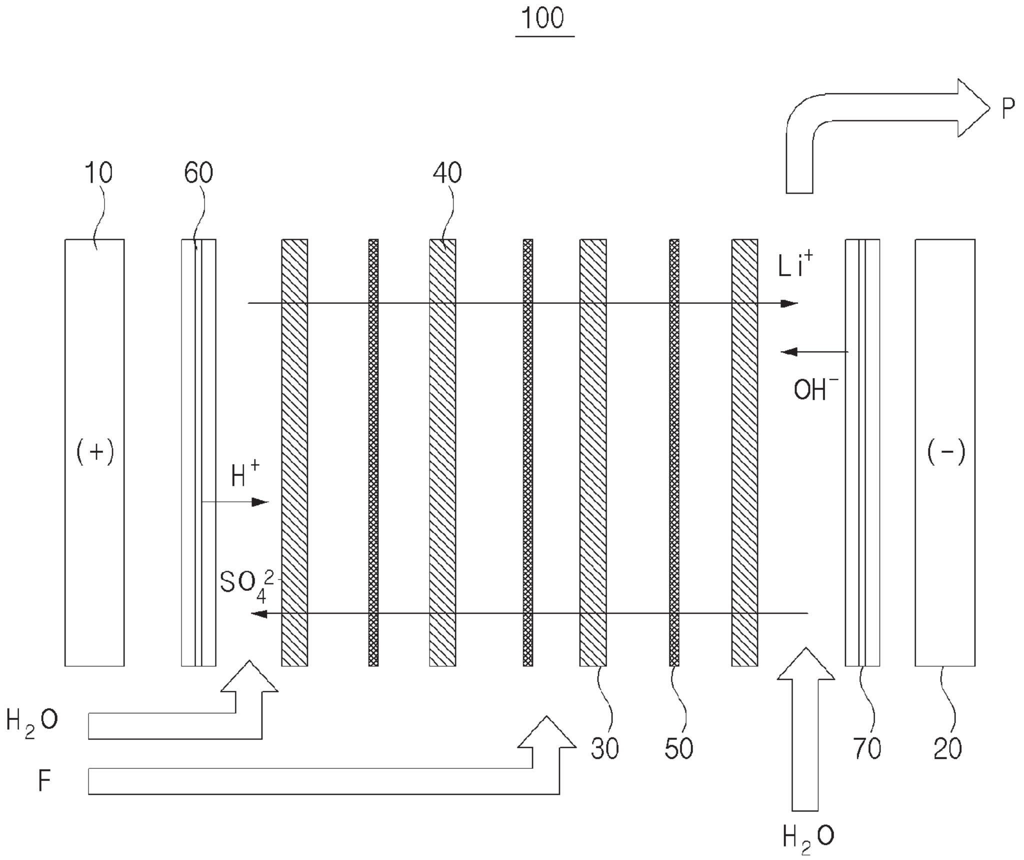

## INTERNATIONAL SEARCH REPORT

International application No.
**PCT/KR2024/010392**

**A. CLASSIFICATION OF SUBJECT MATTER**

**C08G 75/20**(2006.01)i; **C08J 5/22**(2006.01)i; **B01D 71/68**(2006.01)i; **B01D 61/42**(2006.01)i; **B01D 67/00**(2006.01)i; **B01J 39/19**(2017.01)i; **B01J 31/10**(2006.01)i

According to International Patent Classification (IPC) or to both national classification and IPC

**B. FIELDS SEARCHED**

Minimum documentation searched (classification system followed by classification symbols)

C08G 75/20(2006.01); B01D 61/44(2006.01); C01D 15/02(2006.01); C08G 61/12(2006.01); C08G 65/40(2006.01); C08G 75/02(2006.01); C08G 75/04(2006.01); C08J 5/22(2006.01); H01M 8/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 양이온 교환 수지 (cation exchange resin), 전기 투석 장치 (electro-dialysis device), 디페닐디설폰 (diphenyl disulfone), 4,4'-디할로겐디페닐설폰 (4,4'-dihalogendiphenyl sulfone)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2005-059007 A1 (UNIVERSITY OF DAYTON et al.) 30 June 2005 (2005-06-30)<br>See pages 1, 2 and 9; tables 2 and 4; and figure 5. | 1-4,6-8,11-13,26-30<br>5,9,10,14-25 |
| Y | JP 2006-111665 A (TOYOBO CO., LTD.) 27 April 2006 (2006-04-27)<br>See paragraphs [0004] and [0011]-[0018]. | 5,9,10 |
| Y | JP 2012-171827 A (JX NIPPON MINING & METALS CORP.) 10 September 2012 (2012-09-10)<br>See claim 1. | 14-25 |
| Y | KR 10-2010-0076902 A (GENERAL ELECTRIC COMPANY) 06 July 2010 (2010-07-06)<br>See paragraphs [0006], [0044], [0051] and [0110]. | 16-20 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 October 2024** | **27 October 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**

International application No.
**PCT/KR2024/010392**

**C. DOCUMENTS CONSIDERED TO BE RELEVANT**

| Category* | Citation of document, with indication, where appropriate, of the relevant passages | Relevant to claim No. |
|---|---|---|
| A | KR 10-1265971 B1 (MAX-PLANCK-GESELLSCHAFT ZUR FÖRDERUNG DER WISSENSCHAFTEN E.V.) 22 May 2013 (2013-05-22) See claims 1, 10, 14, 31 and 32; and paragraphs [0202]-[0205], [0294] and [0295]. | 1-30 |

Form PCT/ISA/210 (second sheet) (July 2022)

**INTERNATIONAL SEARCH REPORT**
**Information on patent family members**

International application No.
**PCT/KR2024/010392**

| Patent document cited in search report | Publication date (day/month/year) | Patent family member(s) | Publication date (day/month/year) |
|---|---|---|---|
| WO 2005-059007 A1 | 30 June 2005 | CA 2545189 A1 | 30 June 2005 |
| | | EP 1699849 A1 | 13 September 2006 |
| | | TW 200540208 A | 16 December 2005 |
| | | US 2005-0165213 A1 | 28 July 2005 |
| | | US 7265198 B2 | 04 September 2007 |
| JP 2006-111665 A | 27 April 2006 | JP 4848629 B2 | 28 December 2011 |
| JP 2012-171827 A | 10 September 2012 | None | |
| KR 10-2010-0076902 A | 06 July 2010 | EP 2209156 A1 | 21 July 2010 |
| | | JP 2010-155233 A | 15 July 2010 |
| | | US 2010-0167100 A1 | 01 July 2010 |
| KR 10-1265971 B1 | 22 May 2013 | CA 2600213 A1 | 14 September 2006 |
| | | CA 2600213 C | 25 June 2013 |
| | | CN 101171284 A | 30 April 2008 |
| | | CN 101171284 B | 21 March 2012 |
| | | DE 102005010411 A1 | 14 September 2006 |
| | | EP 1856188 A1 | 21 November 2007 |
| | | EP 1856188 B1 | 28 December 2022 |
| | | JP 2008-533225 A | 21 August 2008 |
| | | JP 5454853 B2 | 26 March 2014 |
| | | KR 10-2007-0122456 A | 31 December 2007 |
| | | RU 2007137006 A | 20 April 2009 |
| | | RU 2423393 C2 | 10 July 2011 |
| | | US 2008-0207781 A1 | 28 August 2008 |
| | | US 2013-0079469 A1 | 28 March 2013 |
| | | US 8349993 B2 | 08 January 2013 |
| | | US 8846854 B2 | 30 September 2014 |
| | | WO 2006-094767 A1 | 14 September 2006 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020230127404
- KR 1020230188239